# EUROPÄISCHE PATENTANMELDUNG

(11) **EP 1 750 064 A2**
(43) Veröffentlichungstag der Anmeldung: **07.02.2007**
(21) Anmeldenummer: 06116667.4
(22) Anmeldetag: 05.07.2006
(51) Int. Cl.: F24C 15/16

(54) **Hausgeräteauszugsvorrichtung**

(30) Priorität: 05.08.2005 DE 102005037016
(71) Anmelder: BSH Bosch und Siemens Hausgeräte GmbH, 81739 München (DE)
(72) Erfinder: Fernsebner, Horst, 83246, Unterwössen (DE); Götzendorfer, Franz, 83278, Traunstein (DE); Knoll, Helmut, 83365, Nußdorf (DE); Pavlinec, Tomo, 83301, Traunreut (DE)

(57) **Zusammenfassung**

Die Erfindung geht aus von einer Gargeräteauszugsvorrichtung mit wenigstens einer Lagereinheit (10, 12, 14, 16), die ein wälzkörpergelagertes Lagermittel (18, 20, 22, 24) aufweist, und mit einem Schmiermittel (26, 28).

Um eine kostenreduzierte Hausgeräteauszugsvorrichtung bereitzustellen, die dennoch vorteilhafte Lagereigenschaften aufweist und insbesondere für einen Pyrolysebetrieb geeignet ist, wird vorgeschlagen, dass die Lagereinheit (10, 12, 14, 16) wenigstens eine mit Wälzkörpern (30) korrespondierende, mit dem Schmiermittel (28) zumindest teilweise beschichtete Lagerfläche (32, 34, 36) aufweist.

## Beschreibung

Die Erfindung geht aus von einer Hausgeräteauszugsvorrichtung nach dem Oberbegriff des Anspruchs 1.

Aus der DE 199 49 239 A1 ist eine gattungsbildende Hausgeräteauszugsvorrichtung mit einer Lagereinheit mit einem Schmiermittel bekannt. Die Lagereinheit umfasst entweder Kugeln oder Rollen, die zumindest an ihren Oberflächen aus einem selbstschmierenden Werkstoff gebildet sind. Das Schmiermittel ist in einem Festkörpergefüge der Kugeln oder Rollen eingelagert.

Die Aufgabe der Erfindung besteht insbesondere darin, eine kostenreduzierte Hausgeräteauszugsvorrichtung bereitzustellen, die dennoch vorteilhafte Lagereigenschaften aufweist, und insbesondere für einen Pyrolysebetrieb geeignet ist. Die Aufgabe wird jeweils durch die Merkmale der unabhängigen Patentansprüche gelöst, während vorteilhafte Ausgestaltungen und Weiterbildungen der Erfindung den Unteransprüchen entnommen werden können.

Die Erfindung geht aus von einer Hausgeräteauszugsvorrichtung, insbesondere einer Gargeräteauszugsvorrichtung, mit wenigstens einer Lagereinheit und mit einem Schmiermittel.

Es wird vorgeschlagen, dass die Lagereinheit wenigstens eine mit Wälzkörpern korrespondierende, mit dem Schmiermittel zumindest teilweise beschichtete Lagerfläche aufweist, wodurch eine großflächige, kostengünstige Beschichtung und ein vorteilhaft großes Schmierstoffreservoir realisiert werden kann. Die beschichtete Lagerfläche kann dabei vorteilhaft von einem Innenring, einem Außenring und/oder von einem Käfig gebildet sein.

Ferner wird eine Gargeräteauszugsvorrichtung mit wenigstens einer Lagereinheit vorgeschlagen, die ein wälzkörpergelagertes Lagermittel aufweist, und mit einem Schmiermittel, wobei das Schmiermittel pulverförmig auf wenigstens eine Lagerfläche aufgebracht ist, wodurch eine besonders kostengünstige und effektive Schmierung erreicht werden kann, und zwar insbesondere, wenn das Schmiermittel in eine Lagerbaugruppe der Lagereinheit eingebracht ist. Es kann eine zumindest weitgehend vorteilhafte schmiermittelfreie Montage der Lagerbaugruppe erreicht und es kann eine Beschichtung von mehreren Lagerbauteilen mit dem Schmiermittel in einem Prozess ermöglicht werden. Unter einer "Baugruppe" soll dabei insbesondere eine Einheit mit mehreren montierten Bauteilen verstanden werden.

Das Schmiermittel kann verschiedene, dem Fachmann als sinnvoll erscheinende Bestandteile aufweisen. Besonders vorteilhaft ist das Schmiermittel jedoch zumindest teilweise aus Graphit gebildet, das auch bei hohen Pyrolysetemperaturen keine gesundheitlich bedenklichen Ausgasungen aufweist und damit vorteilhaft, insbesondere in einem Garraum, eingesetzt werden kann.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Gargeräteauszugsvorrichtung in einer ersten Ansicht schräg von oben,
- Fig. 2: einen vergrößerten Ausschnitt einer Schlitteneinheit der Hausgeräteauszugsvorrichtung,
- Fig. 3: eine Einzeldarstellung einer Lagereinheit der Schlitteneinheit in einer Vorderansicht und
- Fig. 4: einen Schnitt entlang der Linie IV-IV in Figur 3.

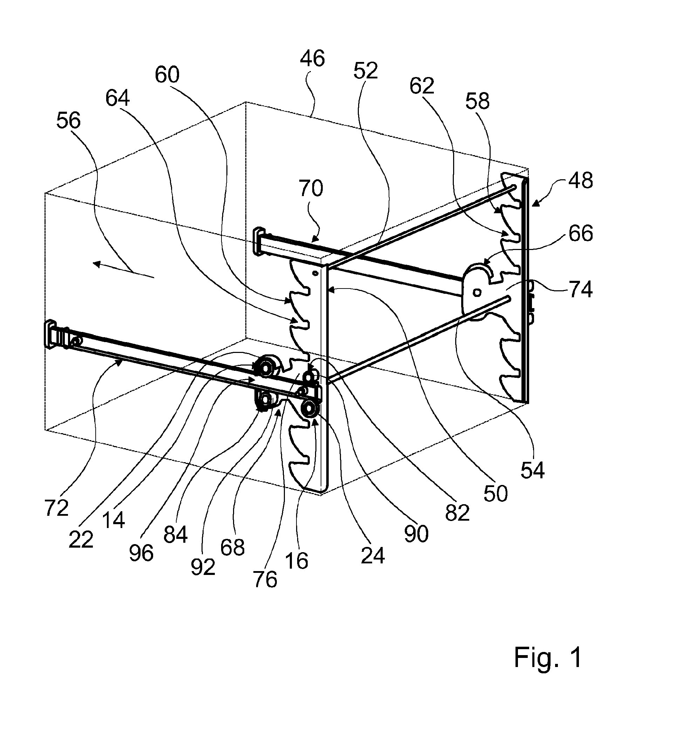

Figur 1 zeigt eine Gargeräteauszugsvorrichtung, und zwar eine Backofenauszugsvorrichtung, die in einer einen Garraum begrenzenden, in Figur 1 angedeuteten Muffel 46 angeordnet ist. Die Gargeräteauszugsvorrichtung umfasst in einer Einbaulage betrachtet zwei horizontal beabstandete, von Blechbiegeteilen gebildete Zubehörträgereinheiten 48, 50 und zwei in der Einbaulage betrachtet sich horizontal erstreckende Traversen 52, 54, über die die Zubehörträgereinheiten 48, 50 gekoppelt sind und die als Versteifungsstreben dienen. An die Zubehörträgereinheiten 48, 50 sind in Auszugsrichtung 56 weisende Trägerarme 58, 60 angeformt, die Aufnahmebereiche 62, 64 begrenzen, in die Zubehörteile eingehängt werden können.

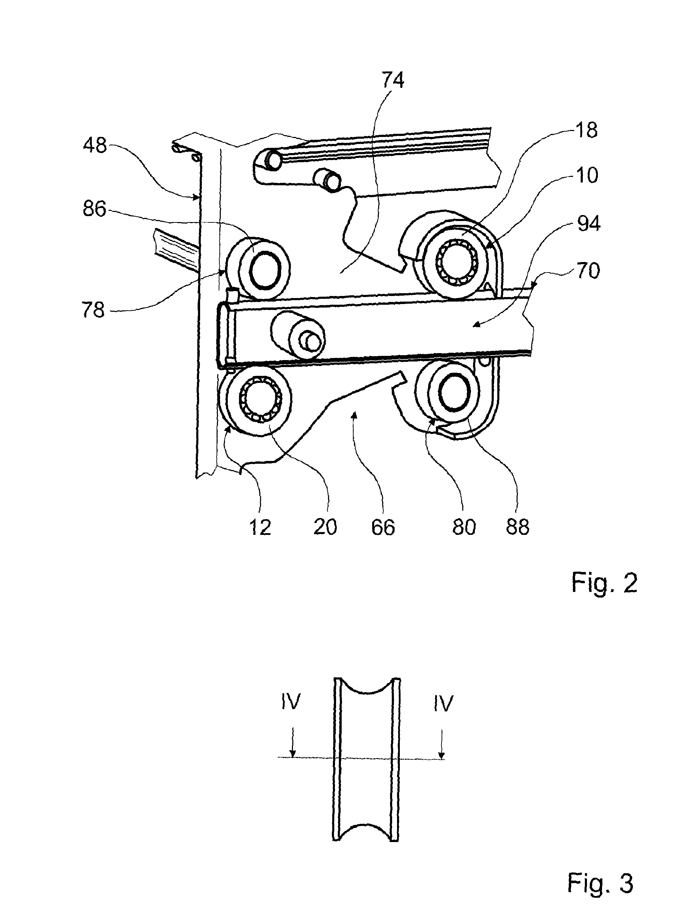

Die Zubehörträgereinheiten 48, 50 sind über Schlitteneinheiten 66, 68 auf an Seitenwänden der Muffel 46 befestigten Lagerschienen 70, 72 verfahrbar gelagert (Figuren 1 und 2). Die Schlitteneinheiten 66, 68 weisen an die Zubehörträgereinheiten 48, 50 einstückig angeformte, sich in Auszugsrichtung 56 über die Trägerarme 58, 60 hinaus erstreckende Trägerteile 74, 76 auf, an denen jeweils vier auf Lagerachsen angeordnete Lagereinheiten 10, 12, 14, 16, 78, 80, 82, 84 angeordnet sind. Jede Schlitteneinheit 66, 68 umfasst artverschiedene Lagereinheiten 10, 12, 14, 16, 78, 80, 82, 84, und zwar weist jede Schlitteneinheit 66, 68 zwei Lagereinheiten 10, 12, 14, 16 auf, die wälzkörpergelagerte Lagermittel 18, 20, 22, 24 umfassen und zwei Lagereinheiten 78, 80, 82, 84, die gleitlagergelagerte Lagermittel 86, 88, 90, 92 umfassen. Dabei sind jeweils diagonal zu einem Schienenaufnahmebereich 94, 96 zwei artgleiche Lagereinheiten 10, 12, 14, 16, 78, 80, 82, 84 angeordnet, wobei die Lagereinheiten 10, 12, 14, 16 zur Abstützung eines Hauptkippmoments und die Lagereinheiten 78, 80, 82, 84 zur Abstützung eines Nebenkippmoments vorgesehen sind. Die Lagermittel 18, 20, 22, 24, 86, 88, 90, 92 selbst werden von rollenartigen Wälzkörpern gebildet.

Die Lagereinheiten 78, 80, 82, 84 mit den gleitlagergelagerten Lagermitteln 86, 88, 90, 92 weisen Notlaufeigenschaften auf, in dem die Lagermittel 86, 88, 90, 92 aus einem selbstschmierenden Werkstoff mit Graphiteinlagerungen gebildet sind. Als Hauptschmierstoff wird in die Lagereinheiten 78, 80, 82, 84 pulverförmig eingebrachtes Graphit genutzt.

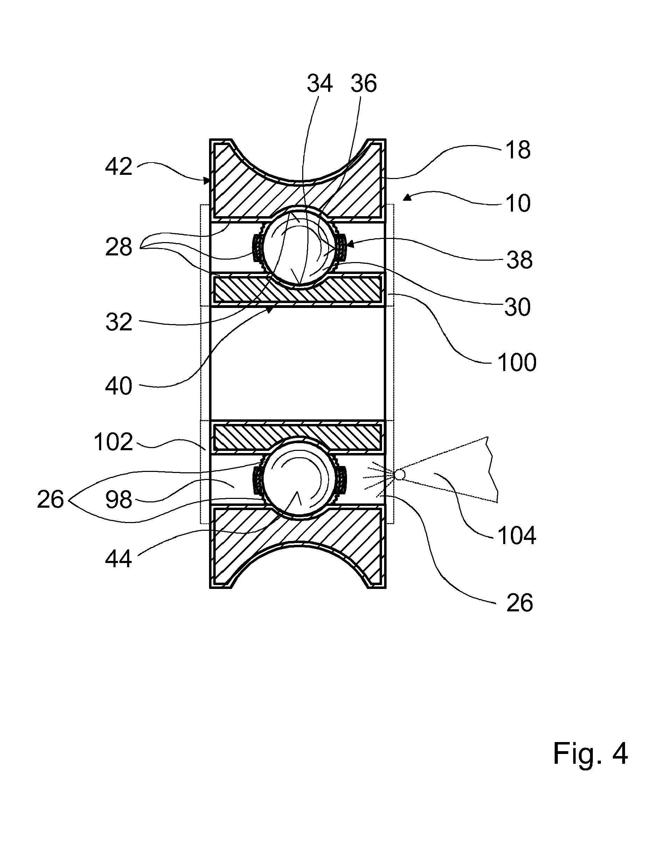

Die Lagereinheiten 10, 12, 14, 16 sind baugleich ausgeführt, so dass im Nachfolgenden die Beschreibung auf die Lagereinheit 10 begrenzt werden kann (Figuren 3 und 4). Die Lagereinheit 10 weist mit Wälzkörpern 30 korrespondierende, mit einem von einem graphithaltigen Gleitlack gebildeten Schmiermittel 28 beschichtete Lagerflächen 32, 34, 36 auf, und zwar umfasst die Lagereinheit 10 einen mit dem Schmiermittel 28 vollflächig beschichteten Wälzkörperkäfig 38, einen mit dem Schmiermittel 28 vollflächig beschichteten Innenring 40 und einen mit dem Schmiermittel 28 vollflächig beschichteten Außenring 42 (Figur 4). Durch die großflächig beschichteten Lagerflächen 32, 34, 36 des Wälzkörperkäfigs 38, des Innenrings 40 und des Außenrings 42 ergeben sich vorteilhaft große Schmiermittelreservoire. Anstatt einer vollflächigen Beschichtung, was besonders einfach realisierbar ist, ist grundsätzlich auch denkbar, dass nur einzelne Flächen beschichtet werden, wodurch Schmiermittel 28 eingespart werden könnte.

Ferner ist in die montierte Lagereinheit 10 mittels eines Sprühwerkzeugs 104 ein pulverförmiges, von Graphitpulver gebildetes Schmiermittel 26 eingebracht, das sich insbesondere auf Lagerflächen 44 der Wälzkörper 30 sowie zwischen dem Wälzkörperkäfig 38 und dem Innenring 40 und dem Außenring 42 ablagert. Um sicherzustellen, dass das Schmiermittel 26 möglichst über die gesamte Lebensdauer in der Lagereinheit 10 verbleibt, ist die Lagereinheit 10 bzw. ein sich zwischen dem Innenring 40 und dem Außenring 42 ergebender Zwischenraum 98 mit in Figur 4 angedeuteten Ringscheiben 100, 102 verschließbar.

### Bezugszeichen

- 10: Lagereinheit
- 12: Lagereinheit
- 14: Lagereinheit
- 16: Lagereinheit
- 18: Lagermittel
- 20: Lagermittel
- 22: Lagermittel
- 24: Lagermittel
- 26: Schmiermittel
- 28: Schmiermittel
- 30: Wälzkörper
- 32: Lagerfläche
- 34: Lagerfläche
- 36: Lagerfläche
- 38: Wälzkörperkäfig
- 40: Innenring
- 42: Außenring
- 44: Lagerfläche
- 46: Muffel
- 48: Zubehörträgereinheit
- 50: Zubehörträgereinheit
- 52: Traverse
- 54: Traverse
- 56: Auszugsrichtung
- 58: Trägerarm
- 60: Trägerarm
- 62: Aufnahmebereich
- 64: Aufnahmebereich
- 66: Schlitteneinheit
- 68: Schlitteneinheit
- 70: Lagerschiene
- 72: Lagerschiene
- 74: Trägerteil
- 76: Trägerteil
- 78: Lagereinheit
- 80: Lagereinheit
- 82: Lagereinheit
- 84: Lagereinheit
- 86: Lagermittel
- 88: Lagermittel
- 90: Lagermittel
- 92: Lagermittel
- 94: Schienenaufnahmebereich
- 96: Schienenaufnahmebereich
- 98: Zwischenraum
- 100: Ringscheibe
- 102: Ringscheibe
- 104: Sprühwerkzeug

## Patentansprüche

1. Gargeräteauszugsvorrichtung mit wenigstens einer Lagereinheit (10, 12, 14, 16), die ein wälzkörpergelagertes Lagermittel (18, 20, 22, 24) aufweist, und mit einem Schmiermittel (26, 28), **dadurch gekennzeichnet, dass** die Lagereinheit (10, 12, 14, 16) wenigstens eine mit Wälzkörpern (30) korrespondierende, mit dem Schmiermittel (28) zumindest teilweise beschichtete Lagerfläche (32, 34, 36) aufweist.

2. Gargeräteauszugsvorrichtung nach Anspruch 1, **dadurch gekennzeichnet, dass** die Lagereinheit (10, 12, 14, 16) einen Wälzkörperkäfig (38) aufweist, der zumindest teilweise mit dem Schmiermittel (28) beschichtet ist.

3. Gargeräteauszugsvorrichtung nach Anspruch 1 oder 2, **dadurch gekennzeichnet, dass** die Lagereinheit (10, 12, 14, 16) einen Innenring (40) aufweist, der zumindest teilweise mit dem Schmiermittel (28) beschichtet ist.

4. Gargeräteauszugsvorrichtung nach einem der vorhergehenden Ansprüche, **dadurch gekennzeichnet, dass** die Lagereinheit (10, 12, 14, 16) einen Außenring (42) aufweist, der zumindest teilweise mit dem Schmiermittel (28) beschichtet ist.

5. Gargeräteauszugsvorrichtung nach dem Oberbegriff des Patentanspruchs 1 und insbesondere nach einem der vorhergehenden Ansprüche, **dadurch gekennzeichnet, dass** das Schmiermittel (26) pulverförmig auf wenigstens eine Lagerfläche (44) aufgebracht ist.

6. Gargeräteauszugsvorrichtung nach einem der vorhergehenden Ansprüche, **dadurch gekennzeichnet, dass** das Schmiermittel (26) in eine Lagerbaugruppe der Lagereinheit (10, 12, 14, 16) eingebracht ist.

7. Gargeräteauszugsvorrichtung nach einem der vorhergehenden Ansprüche, **dadurch gekennzeichnet, dass** das Schmiermittel (26, 28) zumindest teilweise aus Graphit gebildet ist.

8. Gargerät mit einer Gargeräteauszugsvorrichtung nach einem der vorhergehenden Ansprüche.

9. Verfahren zur Herstellung einer Gargeräteauszugsvorrichtung zumindest nach Anspruch 5, **dadurch gekennzeichnet, dass** das Schmiermittel (26) pulverförmig in die Lagereinheit (10, 12, 14, 16) eingebracht wird.
